Europäisches Patentamt
European Patent Office
Office européen des brevets

(11) Publication number: 0 290 115 A2

# EUROPEAN PATENT APPLICATION

(21) Application number: 88300591.0

(22) Date of filing: 25.01.88

(51) Int. Cl.[4]: D21H 1/28 , C08F 212/04 , C08F 214/08 , C08F 236/10 , //(C08F212/04,236:08,214:08), (C08F214/08,236:10), (C08F236/10,214:08)

The title of the invention has been amended (Guidelines for Examination in the EPO, A-III, 7.3).

(30) Priority: 06.04.87 US 34977

(43) Date of publication of application: 09.11.88 Bulletin 88/45

(84) Designated Contracting States: BE DE FR GB IT LU NL

(71) Applicant: GENCORP INC.
175 Ghent Road
Akron Ohio 44313(US)

(72) Inventor: Carmichael, John E.
760 Woodbrook Road
Cuyahoga Falls Ohio 44223(US)
Inventor: Scobbo, James J.
4282 Maplepark Drive
Stow Ohio 44224(US)
Inventor: Vincent, Edward M.
2003 Willowdale Drive
Stow Ohio 44224(US)
Inventor: Romer, Clement T., III
2045 Akron-Peninsula Road
Akron Ohio 44313(US)
Inventor: Miller, Chauncy E.
3832 Shellhart Road
Norton Ohio 44203(US)

(74) Representative: Armitage, Ian Michael et al
MEWBURN ELLIS & CO. 2/3 Cursitor Street
London EC4A 1BQ(GB)

## (54) Coating compositions for paper.

(57) A coating composition containing a latex bound copolymer made in part from vinylidene chloride monomers has improved ink gloss when utilized on paper substrates. The remaining monomers forming the copolymer include conjugated dienes such as butadiene, vinyl substituted aromatics such as styrene, and functional compounds such as itaconic acid.

EP 0 290 115 A2

# LATEX BOUND COATING COMPOSITIONS FOR PAPER SUBSTRATES HAVING AN IMPROVED INK GLOSS

The present invention relates to a latex bound coating composition which, when applied to paper substrates, yields improved ink gloss.

Heretofore, it has not been known to incorporate vinylidene chloride into latex polymers to improve the ink gloss of paper substrates. Rather vinylidene chloride has been utilized in various copolymers to act as a barrier coating.

For example, U.S. Patent No. 3,397,165 to Brighton, et al, relates to the formation of butadiene polymer latices prepared by polymerizing monomers in the presence of a seed latex having a particle size of 50 to 800 angstroms. Monomers are added at a rate which permits coverage of about 30-70% of the surface of the enlarging latex particle until the desired particle size is reached.

Similarly, U.S. Patent No. 3,472,808 to Isgur relates to a copolymer containing a conjugated diene, styrene, and/or acrylonitrile, vinylidene chloride and a monomer such as acrylamide, methacrylamide, or an unsaturated mono or dicarboxylic acid.

Accordingly, it is desirable that the present invention should provide a latex bound coating containing a copolymer prepared from various monomers including vinylidene chloride. The latex bound coating composition, when applied to various paper substrates, for example paper or paperboard, has been found to improve various properties thereof including ink gloss.

A latex bound coating composition comprises a major amount by weight of at least one pigment and a minor amount by weight of at least one binder, said binder containing an effective amount of a latex copolymer to produce improved ink gloss on a substrate, said improved ink gloss imparting copolymer made by polymerizing from about 20% to about 60% by weight based upon the weight of the total copolymer forming monomers of a conjugated diene having from 4 to 8 carbon atoms, from about 0.1% to about 60% by weight based upon the weight of the total copolymer forming monomers of a vinyl substituted aromatic having from 8 to 12 carbon atoms, from about 30% to about 80% by weight based upon the weight of the total copolymer forming monomers of vinylidene chloride, and from about 0.5% to about 15% by weight based upon the weight of the total copolymer forming monomers of a functional monomer.

The aqueous latex bound coating compositions of the present invention containing copolymers made in part from vinylidene chloride monomers are suitable for use on various substrates such as on paper substrates, for example, paper and paper board inasmuch as they yield improved ink gloss. The coating composition is generally an aqueous system containing a major amount by weight of one or more pigments therein, a minor amount by weight of one or more binders therein, and generally small amounts of various conventional additives such as thickeners, dispersants, lubricants, crosslinking agents, and the like.

Considering the pigments, they can be various conventional pigments as well as those known to the art and to the literature. Such pigments include mineral pigments such as titanium dioxide, calcium carbonate, various conventional silicates, barium sulfate, magnesium oxide, and the like. Various plastic pigments can also be utilized such as polystyrene, urea formaldehyde, and the like. The amount of such pigments is generally established at 100 parts by weight with the various other remaining components or ingredients of the coating composition being based thereon.

The amount of binders is generally from about 2 or 3 parts to about 30 parts by weight with from about 6 to about 22 parts by weight being preferred, based upon 100 parts by weight of the pigments. One or more binders can be utilized including various synthetic binders and/or natural binders. According to the concepts of the present invention, a synthetic binder which imparts improved ink gloss to a substrate is utilized and in part is made from vinylidene chloride monomers. In addition to the synthetic binder of the present invention, various other synthetic binders can be utilized such as carboxylated styrene-butadiene copolymers, noncarboxylated styrene-butadiene copolymers, polyvinyl acetates, polyvinyl alcohols, polyacrylates, various styrene acrylates, and the like. The amount of synthetic binder generally utilized can vary from about 25% by weight to about 75% by weight based upon the total weight of the synthetic and natural binders. Hence, the amount of natural binders can vary from about 75% by weight to about 25% by weight based upon the total weight of the natural and synthetic binders. The ink gloss imparting synthetic binder of the present invention, made in part from vinylidene chloride monomers, is utilized in an effective amount such that when the coating composition is applied to a substrate, for example a paper substrate, improved ink gloss is obtained. Generally, the amount of the ink gloss imparting synthetic binder of the present invention is from about 25% by weight to about 100% by weight, and preferably from about 50% to about 100% by weight, based upon the total weight of all the binders, that is snythetic and natural.

The natural binders which can be optionally utilized in association with the synthetic binder of the

present invention are conventional binders as well as those known to the art and to the literature. Examples of such natural binders include pearl starches, modified starches, soya proteins, modified soya proteins, various caseins, and other natural gums.

The ink gloss imparting synthetic latex copolymers of the present invention are generally made from conjugated diene monomers, vinyl substituted aromatic monomers, vinylidene chloride monomers, and functional monomers. Considering the conjugated diene monomers, they generally have from 4 to 8 carbon atoms with from 4 to 6 carbon atoms being desired. Butadiene is preferred. Examples of specific diene monomers include isoprene, piperylene, 2,3-dimethyl-1,3-butadiene, pentadiene, hexadiene, and the like with 1,3-butadiene being preferred. Mixtures of various conjugated dienes can also be utilized. That is, one or more different types of the conjugated diene monomers can be utilized in the present invention. The amount of the conjugated diene monomers utilized to make the latex copolymer is generally from about 20% to about 60% by weight with from about 30% to about 50% by weight being preferred based upon the total weight of all of the monomers forming the latex copolymer.

The vinyl substituted aromatic monomers utilized in forming the latex copolymer of the present invention generally have from about 8 to about 12 total carbon atoms, and preferably from about 8 to about 10 carbon atoms. Specific examples of such monomers include alpha methyl styrene, p-tertiary butyl styrene, methyl vinyl toluene, p-vinyl toluene, 3-ethyl styrene, and the like with styrene being preferred. In lieu of a single vinyl substituted aromatic type monomer, a plurality of such monomers can be utilized. The amount of the vinyl substituted aromatic can vary over a wide range such as from about 0.1% to about 60% by weight based upon the total weight of all of the latex forming monomers, and preferably from about 2.0% to about 20% by weight.

It has unexpectantly been found that when vinylidene chloride monomer are utilized in the preparation of a latex copolymer as for coating paper substrates, the substrate has improved ink gloss. The amount of vinylidene chloride utilized is generally from about 30% to about 80% by weight, and preferably from about 40% to about 60% by weight based upon the total weight of the all of the latex copolymer forming monomers.

Various functional monomers are utilized in the formation of the ink gloss imparting synthetic binder of the present invention since they impart stabilization and strength to the formed copolymer. The functional monomers utilized are generally anionic monomers such as the various acrylamides, the various methacrylamides, the various vinyl ethers, and the various non-saturated mono-or dicarboxylic acids. The total amount of such functional monomers is generally from about 0.5% to about 15% by weight, desirably from about 1% to about 10% by weight, and preferably from about 3% to about 6% by weight based upon the total weight of all of the latex copolymer forming monomers.

The unsaturated mono-and dicarboxylic acids generally have a total of from about 3 to about 8 carbon atoms, desirably from about 3 to about 6 carbon atoms, and preferably from about 3 to about 5 carbon atoms. Examples of monocarboxylic acids include acrylic acid and methacrylic acid. Examples of dicarboxylic acids include fumaric acid, maleic acid, itaconic acid, and the like. Itaconic and acrylic acid are preferred.

The acrylamides and the methacrylamides include various alkyl derivatives thereof having from 1 to 2 carbon atoms attached to either the nitrogen atom and/or the vinyl group with specific examples including dimethylacrylamide, methylene bisacrylamide, and the like.

The vinyl ethers are another class of functional monomers which can be utilized in the present invention. They are generally represented by the formula

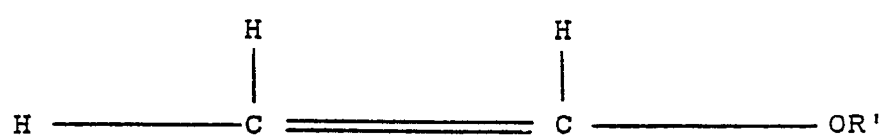

wherein;

R′ is an alkyl group having from 1 to 6 carbon atoms, or a substituted chloralkyl group having a total of from 1 to 6 carbon atoms. Examples of such specific vinyl ethers include n-butyl vinyl ether, vinyl chloroethyl ethyl, and the like.

The copolymer forming monomers of the present invention can be reacted according to any conventional free-radical aqueous polymerization method known to the art as well as to the literature. Moreover, if desired, other types of polymerization, for example anionic, methods can be utilized.

Various conventional amounts of conventional emulsion polymerization additives can be utilized in the

present invention. Such emulsion polymerization additives include various emulsifiers, various chain transfer agents or extenders which act as molecular weight modifiers, various free-radical initiators, and the like. Considering the emulsifiers, they can be any compound known to the art as well as to the literature such as soaps, surfactants, dispersing agents, and the like. The surfactants as well as the other emulsifiers can be cationic, anionic, or mixtures thereof with nonionics. Examples of specific emulsifiers include the various alkyl sulfates, the various alkyl sulfosuccinates, the various alkyl aryl sulfonates, the various alpha olefin sulfonates, the various quarternary ammonium salts, the various amine soaps, the various fatty or resin acid soaps, nonyl or octyl phenol reaction products of ethylene oxide and the like. The alkyl portion of the various emulsifiers generally has from 8 to 18 carbon atoms. Naturally, an amount of an emulsifier is utilized to obtain an aqueous emulsion of the various monomers. Generally, such an amount is typically from about 0.1 to about 5 or 6 parts by weight for every 100 parts by weight of the monomers. Other surfactants can be utilized such as those set forth in "Surface Active Agents," Schwartz and Perry, Vol I, Interscience Publishers, Inc., New York, 1958; "Surface Activity," Moilliet, Collie and Black, D. Van Nostrand Company, Inc., New York, 1961; "Organic Chemistry," Fieser and Fieser, D.C.. Heath and Company, Boston, 1944; and "The Merck Index," Seventh Edition, Merck & Co., Inc., Rahway, N.J., 1960, all of which are hereby fully incorporated by reference.

The various chain extenders or molecular weight regulators can be conventional compounds as well as those known to the art and to the literature. Accordingly, compounds such as benzene, toluene, triphenyl methane, and carbon tetrachloride can be utilized. However, mercaptans such as the alkyl and/or arylalkyl mercaptans having from 8 to about 18 carbon atoms and preferably from about 12 to about 14 carbon atoms are preferably utilized. The tertiary alkyl mercaptans having from 12 to 14 carbon atoms are highly preferred. Examples of suitable mercaptans include n-octyl mercaptan, n-dodecyl mercaptan, t-octylmercaptan, t-dodecyl mercaptan, p-tridecyl mercaptan, tetradecyl mercaptan, hexadecyl mercaptan, and the like, as well as mixtures thereof. The amount of the molecular weight modifiers is an effective amount to provide for the proper retention of the tensile strength of the interpolymer, for example from about 0.1 to about 5.0 parts by weight and desirably from about 0.2 to about 1.0 parts by weight for every 100 parts by weight of the monomers.

Free-radical initiators are utilized to polymerize the various monomers and are utilized in amounts sufficient to obtain a desired high conversion. A suitable amount is generally from about 0.1 or 0.2 to about 2.0 with from about 0.5 to about 1.5 parts being preferred for every 100 parts by weight of the monomers. Conventional free-radical initiators can be utilized as well as those known to the art and to the literature. Specific examples include ammonium, potassium, and/or sodium persulfate, hydrogen peroxide, and the like. Other free-radical initiators can be utilized which decompose or become active at the temperature utilized during polymerization. Examples of other free-radical catalysts include cumene hydroperoxide, dibenzoyl peroxide, diacetyl peroxide, dodecanoyl peroxide, di-t-butyl peroxide, dilauroyl peroxide, bis(p-methoxy benzoyl) peroxide, t-butyl peroxy pivalate, dicumyl peroxide, isopropyl percarbonate, di-sec-butyl peroxidicarbonate, azobisdimethylvaleronitrile, 2,2′-azobisisobutyronitrile, 2,2′ azobis-2-methyl-butyronitrile, 2,2′-azobis (methylisobutyrate) and the like and mixtures thereof. It is preferred to use the inorganic persulfates of which the sodium salt is preferred since they impart better color to the resulting polymer when dried. Organic hydroperoxides such as t-butyl hydroperoxides are preferred for the cationic system of the present invention.

Polymerization of the various latex forming copolymer monomers is carried out at a temperature sufficient to activate the initiators. However, extremely high temperatures are avoided since they cause a run-away reaction. Too low temperatures are not desired since they give slow polymerization rates. Suitable polymerization temperatures are from about 2°C to about 90°C, desirably from about 35°C to about 80°C, and preferably from about 65°C to about 80°C. Polymerization time will naturally vary depending upon the type of monomers utilized, the type of initiator utilized, and the degree of polymerization desired. Hence, typical polymerization times can range from about 5 to about 35 hours. Polymerization is generally carried out to high conversion and conducted in an acidic medium when acidic monomers are utilized. Upon completion of the reaction or the desired degree of conversion, optional bases can be added to neutralize the latex. Examples of such optional bases include NaOH, KOH, $NH_4OH$, and the like.

The free radical polymerization can be carried out according to any conventional method including batch, incremental, or continuous. Upon completion of polymerization, the amount of copolymer or solids content can vary from about 10% to about 60% by weight and preferably from about 40% to about 55% by weight.

Desirably, polymerization is conducted in an inert atmosphere such as nitrogen, helium, argon, and the like and hence it is carried out in a closed reactor. The reactor can be any conventional reactor and thus have suitable ports, agitation means, heating and cooling means, and the like. In accordance with

conventional practice. the reactors utilized are generally cleaned as by flushing with water between polymerizations to remove traces of various initiators. shortstops. residues. surfactants. and the like.

The copolymer latexes of the present invention can be treated with other conventional additives such as antioxidants. biocides, defoamers, and the like as known to the art and to the literature.

The latex copolymer of the present invention is compounded with various pigments, as noted hereinabove, and various additives to form the latex coating composition of the present invention. The amount of binders can be varied to produce desired results with regard to strength, gloss brightness, opacity, and ink gloss.

The latex coating additives are conventional and are utilized in conventional amounts. Such additives include various thickeners, various dispersants, various dyes, various lubricants, various crosslinking agents, and the like. Such compounds are known to the art as well as to the literature and generally exist in small amounts as from about 0.1% to about 2% or 3% by weight based upon 100 parts by weight of the pigment. By way of example, a desirable thickener is a carboxylated methyl cellulose. The amount utilized is very small as from about 0.1% to about 0.4% by weight based upon 100 parts by weight of the pigment. Example of suitable dispersants are set forth hereinabove with regard to the preparation of the coating. An example of a desired crosslinking agent is melamine formaldehyde in an amount of from about 2% to about 10% by weight based upon 100 parts by weight of the binder. Calcium sterate can be utilized as a suitable lubricant in an amount of from about 0.25% to about 2% by weight based upon 100 parts by weight of the pigment. As noted above, such additives are conventional and thus various amounts thereof can be utilized as set forth in various references, encyclopedias, and the like.

The latex coating composition of the present invention, when applied to paper substrates such as paper or paper board, and dried, has unexpectedly been found to yield notable improvements in ink gloss. The ink gloss is generally measured in a manner as set forth hereinabelow and relates merely to applying a solid film of ink of a desired density and type to a paper substrate, and measuring the gloss or reflectants therefrom.

The examples of the present invention utilized TAPPI Test T 480 os-78, that is Specular Gloss of Paper and Paper Board at 75 degrees. Since this test is well known to the art, it is hereby incorporated by reference.

The latex coating compositions of the present invention can be applied to paper substrates in any conventional manner as by blade coating, air knife coating, size press coating, rod coating, cast coating, and the like.

The application utilized in the examples of the present invention of the coating composition to the paper substrate is set forth in the following Gloss Ink Hold-Out Test.

## GLOSS INK HOLD OUT TEST

### Scope

This test is designed to indicate the ability of the coating to hold the ink on the uppermost surface of the coating in order that higher gloss ink values can be obtained. The reason that this is a desired quality of the present invention is that thinner ink films can be printed on the paper and still have good ink gloss.

### Equipment Needed

1. Samples of board or paper at least 6" × 10".
2. A leveling or scraping bar at least 4 1/2" long with edges that are neither nicked or worn.
3. A NPIRI Style B Ink Plate. This can be obtained from the Precision Gage & Tool Co., Dayton, OH.
4. Little Joe Offset Press.
5. A high gloss heat set offset ink.
6. An IGT Ink Pipette.
7. Forced Air Oven set @ 150°C. Dry 4 seconds.
8. A Gloss Meter with the ability to measure the gloss of an area smaller than 1" × 1 1/2", 75 degrees Gardner.

9. Ink Density Tester - Wizard X-Rite 328.

Procedure

1. Using a suitable solvent system, clean the ink plate to insure that no solvents or rust preventative oils and/or dust is on the polished surface.

2. Using the ink pipette, apply 0.2cc of ink to the tip and on each depression on the printing blade.

3. Draw ink down towards the shallow end of the gloss ink plate with the scraper blade. If there are scratches in the ink film, it is not necessary to reapply more ink, just repeat the drawdowns until no scratches are present in the ink film.

4. The printing pressure on the press should be adjusted.

5. The freshly printed sheet should then be placed in the oven at 150°0 for 4 seconds.

6. The gloss and density of the ink film are to be read between 0-2, 2-4, ... 10-12 microns and the readings from each side averaged. The readings must be taken from the light to the dark side of the printed ink film to insure proper response from the gloss meter. Measurements should be taken within 1 hour of printing.

7. This data can then either be plotted, Ink Density versus Gloss, for a graphic display of the data or gloss regressed against ink density to obtain predictive mathematical models.

The type of ink application was an offset press and since utilization of such presses are known and conventional, the exact description thereof is not set forth.

The invention will be better understood by reference to the following examples.

EXAMPLE I

A latex copolymer was prepared in accordance with the following chart wherein a relatively high amount of vinylidene chloride was utilized.

IMPROVED INK GLOSS LATEX COPOLYMER FORMULATION

| MATERIALS | PARTS |
|---|---|
| Vinylidene Chloride | 60.0 |
| Styrene | 3.5 |
| Butadiene | 34.5 |
| Itaconic Acid | 1.5 |
| Methacrylic Acid | 0.5 |
| Tertiary Dodecylmercaptan | 0.5 |
| Water | 103 |
| Sodium Dodecyloxydibenzene Disulfonate | 0.12 |
| Sodium Diisobutylsulfosuccinate | 1.0 |
| Trisodium Ethylenediamine Tetraacetate Trihyhdrate | 0.05 |
| Potassium Carbonate | 1.43 |

Generally, the water and soaps were initially charged to an agitated reactor along with itaconic acid. The reactor was subsequently heated and a portion of the catalyst was added along with styrene. The polymerization followed an incremental process well known to the art and to the literature. That is, multiple charges were made after periods of polymerization wherein styrene, vinylidene chloride, butadiene, the various catalyst, and the remaining compounds were added. The total amount of incremental polymerization time was approximately from 8 to about 10 hours.

A pigmented coating system was prepared and subsequently added to the latex containing the above copolymer therein. The formulation of the pigmented coating system is as follows:

## COATING SYSTEM FORMULATION

| MATERIALS | PARTS BY WEIGHT A | PARTS BY WEIGHT B |
|---|---|---|
| PIGMENTS | | |
| HYDRAFINE CLAY | 75 | 75 |
| CALCIUM CARBONATE (FINE GROUND) | 25 | 25 |
| ADDITIVE | | |
| TSPP | .05 | .05 |
| COLLOIDS 211 | .15 | .15 |
| CMC 7M-31 | .2 | --- |
| $NH_4OH$ | .2(wet) | .2(wet) |
| PENFORD GUM 280 | --- | 4.0 |
| LATEX | 16 | 12 |
| SUNREZ 666 | .2 | .4 |
| NOPCOTE C-104 | .4 | .4 |
| pH | 8.5-9.0 | 8.5-9.0 |
| % SOLIDS | 63 | 63 |

The various ingredients mixed to form the coating composition. A description of the various ingredients in the above table as is follows:

TSPP Tetra sodium pyrophosphate

Colloids 211 Anionic polyelectrolyte - organic pigment dispersant - Manufactured by Colloids

CMC 7M-31 Carboxy methyl cellulose - thickener water retention aid - Manufactured by Hercules

Penford Gum 280 Modified cor starch - Manufactured by Penick & Ford LTD

Sunrez 666 Melamine formaldehyde crosslinking agent - Manufactured by Sun Chemical Company

Nopcote C-104 Emulsified calcium searate lubricant - Manufactured by Occidental Petroleum, formally Diamond Shamrock

The above two coating formulations are essentially identical with the exception that formula B contained

4.0 parts by weight of a starch based upon 100 parts by weight of pigment. Pigment coating formulation A was added to the latex set forth hereinabove containing 16 parts by weight of solids therein and mixed. Formulation B was prepared by heating the starch additive to approximately 90°F to 100°F. adding it to the inorganic pigments, and mixing the two components together. The remaining additives were then added and mixed. The two separate latex bound compositions where then applied to a starch sized wood-free paper, 50 lb ream. The applicator variables were are as follows:

<u>APPLICATOR VARIABLES:</u>

Bodystock -Somerset (Wire Side)
Applicator -Helicoater
Speed -2,000 FPM
Coat Weight -6 lbs. and 9 lbs. 3399 sq.ft.
Drying -60 seconds using combination infrared and forced air
Finishing -Temperature 150°F
-Pressure 600 Pli
-Nips 3 (coating up) against a steel roll

When the coating was applied in a manner as set forth hereinabove and tested according to TAPPI Test T 480 os-78, an average ink gloss value of 83 was obtained. In contrast thereto, when a standard carboxylated latex copolymer, that is a carboxylated styrene-butadiene copolymer was utilized (for example. made from 30 parts by weight of butadiene, 65.25 parts by weight of styrene, and 4.75 parts by weight of a functional monomer such as itaconic acid and methacrylic acid and generally the same additives and pigments set forth in the above example) and applied in a manner as set forth in the above ink gloss procedure and measured according to the TAPPI ink gloss test, an average value of only 77 was obtained. It is thus apparent that a significant improvement in ink gloss was obtained utilizing the vinylidene chloride containing latex copolymer of the present invention.

**Claims**

1. A coating composition, comprising:

a major amount by weight of at least one pigment, and a minor amount by weight of at least one binder, said binder containing an effective amount of a copolymer to produce improved ink gloss on a substrate, said improved ink gloss imparting copolymer being made by polymerizing from about 20% to about 60% by weight based upon the total weight of all of the copolymer forming monomers of a conjugated diene having from 4 to 8 carbon atoms, from about 0.1% to about 60% by weight based upon the total weight of all of the copolymer forming monomers of a vinyl substituted aromatic having from 8 to 12 carbon atoms, from about 30% to about 80% by weight based upon the total weight of all of the copolymer forming monomers of vinylidene chloride, and from about 0.5% to about 15% by weight based upon the total weight of all of the copolymer forming monomers of a functional monomer.

2. A coating composition according to claim 1, wherein said substrate is paper or paperboard, wherein said functional monomer is an acrylamide, a methacrylamide, or alkyl derivatives thereof having from 1 to 2 carbon atoms attached to the nitrogen atom or to the vinyl group; a vinyl ether having the formula

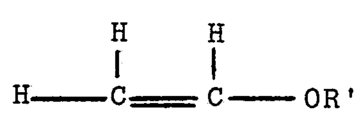

wherein R′ is an alkyl group having from 1 to 6 carbon atoms, or a substituted chloroalkyl group having from 1 to 6 carbon atoms; or an unsaturated monocarboxylic acid or an unsaturated dicarboxylic acid having a total of from 3 to 8 carbon atoms; or combinations thereof.

3. A coating composition according to claim 1 or claim 2, wherein the total amount of binder is from about 2 to about 30 parts by weight based upon 100 parts of weight of said pigment, wherein said binder comprises one or more synthetic copolymers including said improved ink gloss imparting copolymer and

one or more natural binders, wherein the amount of said synthetic copolymer is from about 25% to about 75% by weight based upon the total weight of said synthetic copolymer and said natural binder, wherein the amount of said natural binder is from about 75% by weight to about 25% by weight based upon the total weight of said natural binder and said synthetic copolymer, and wherein the amount of said improved ink gloss imparting copolymer is from about 25% to about 100% by weight based upon the total weight of said synthetic and natural binders.

4. A coating composition according to any one of the preceding claims wherein said conjugated diene has from 4 to 6 carbon atoms, wherein said vinyl substituted aromatic has from 8 to 10 carbon atoms, wherein said functional monomer is acrylamide, methacrylamide, an unsaturated monocarboxylic acid having a total of from 3 to 6 carbon atoms, an unsaturated dicarboxylic acid having a total of from about 3 to 6 carbon atoms, or combinations thereof.

5. A coating composition according to any one of the preceding claims wherein the amount of said conjugated diene is from about 30% to about 50% by weight, wherein the amount of said vinyl substituted aromatic is from about 2% to about 20% by weight, wherein the amount of said vinylidene chloride is from about 40% to about 60% by weight, and wherein the amount of said functional monomer is from about 1.0% to about 10% by weight, wherein the total amount of said binders is from about 6 parts to about 22 parts by weight based upon 100 parts of said pigment, and wherein the amount of said improved ink gloss imparting copolymer is from about 50% to about 100% by weight based upon the total weight of said synthetic and natural binders.

6. A coating composition according to any one of the preceding claims wherein said conjugated diene is butadiene, wherein said vinyl substituted aromatic is styrene, and wherein said functional monomer is acrylic acid, itaconic acid, or combinations of said acids.

7. A latex copolymer for enhancing ink gloss of a paper substrate said copolymer being made by polymerization of from about 20% to about 60% by weight based upon the total weight of all of the copolymer forming monomers of a conjugated diene having from 4 to 8 carbon atoms, from about 0.1% to about 60% by weight based upon the total weight of all of the copolymer forming monomers of a vinyl substitued aromatic having from 8 to 12 carbon atoms, from about 30% to about 80% by weight based upon the total weight of all of the copolymer forming monomers of vinylidene chloride, and from about 0.5% to about 15% by weight based upon the weight of the total copolymer forming monomers of a functional monomer.

8. A latex copolymer for use on paper substrates according to claim 7, wherein said functional monomer is an acrylamide, a methacrylamide, or alkyl derivatives thereof having from 1 to 2 carbon atoms attached to the nitrogen atom or to the vinyl group; a vinyl ether having the formula

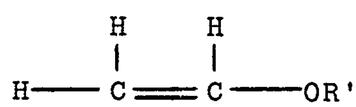

wherein R' is an alkyl group having from 1 to 6 carbon atoms, or a substituted chloroalkyl group having from 1 to 6 carbon atoms; or an unsaturated monocarboxylic acid or an unsaturated dicarboxylic acid having a total of from 3 to 8 carbon atoms, wherein said conjugated diene has from 4 to 6 carbon atoms, and wherein said vinyl substituted aromatic has from 8 to 10 carbon atoms.

9. A latex copolymer for use in paper coatings according to claim 8, wherein the amount of said conjugated diene is from about 30% to about 50% by weight, wherein the amount of said vinyl substituted aromatic is from about 2% to about 20% by weight, wherein the amount of said vinylidene chloride is from about 40% to about 60% by weight, and wherein the amount of said functional monomer is from about 3 % to about 6% by weight.

10. A latex copolymer for use in paper coatings according to claim 8 or claim 9 wherein said conjugated diene is butadiene, wherein said vinyl substituted aromatic is styrene, wherein said functional monomer is acrylate, methacrylate, fumaric acid, maleic acid, itaconic acid, or combinations thereof.

11. A coated paper substrate comprising:

a coating, said coating comprising at least one pigment and at least one binder, the amount of said binder ranging from about 2 parts to about 30 parts by weight per 100 parts by weight of said pigment, said binder including a copolymer, said copolymer made from monomers of a conjugated diene having from 4 to 8 carbon atoms, a vinyl substituted aromatic monomer having from 8 to about 12 carbon atoms, a functional monomer, and an effective amount of a vinylidene chloride monomer to improve the ink gloss of paper coated with said coating.

12. A coated paper substrate according to claim 11, wherein the amount of said vinylidene chloride is from about 30% to about 80% by weight based upon the total weight of said latex copolymer forming monomers.

13. A coated paper substrate according to claim 11 or claim 12, wherein the amount of said conjugated diene monomers is from about 20% to about 60% by weight based upon the total weight of said copolymer forming monomers, wherein the amount of said vinyl substituted aromatic monomers is from about 0.1% to about 60% by weight based upon the total weight of said copolymer forming monomers, and wherein the amount by weight of said functional monomers is from about 0.5% to about 15% by weight based upon the total weight of said copolymer forming monomers.

14. A coated paper substrate according to any one of claims 11 to 13, wherein said conjugated diene has from 4 to 6 carbon atoms and the amount thereof is from about 30% to about 50% by weight, wherein said vinyl substituted aromatic monomer has from 8 to 10 carbon atoms and the amount thereof is from about 2% to about 20% by weight, wherein the amount of said vinylidene chloride monomers is from about 40% to about 60% by weight, and wherein said functional monomer is acrylate, methacrylate, fumaric acid, maleic acid, itaconic acid, or combinations thereof, the amount of said functional monomer is from about 0.5% to about 15% weight.

15. A coated paper substrate according to any one of claims 11-14, wherein said conjugated diene is butadiene, wherein said vinyl substituted aromatic is styrene, and wherein said functional monomer is acrylic acid, itaconic acid, or combinations of said acids.

16. A coating composition for use in the production of a coated paper substrate according to any one of claims 11-15.